# FASCICULE DE BREVET EUROPEEN

(11) **EP 2 632 001 B1**
(45) Date de publication et mention de la délivrance du brevet: **18.06.2014**
(21) Numéro de dépôt: 12305203.7
(22) Date de dépôt: 22.02.2012
(51) Int. Cl.: H02G 3/08, H02G 3/14

(54) **Appareil électrique à couvercle fixé dans l'élément de montage**
Elektrisches Gerät mit im Montagelement fixiertem Deckel
Electrical appliance with lid attached in the mounting member

(43) Date de publication de la demande: 28.08.2013
(73) Titulaire: Berker GmbH & Co. KG, 58579 Schalksmühle (DE)
(72) Inventeur: Gatto, Davide, 25017 Lonato del Garda (BS) (IT)
(74) Mandataire: Nuss, Laurent

(56) Documents cités:
- EP-A1- 1 860 748
- CH-A5- 696 899

## Description

La présente invention relève du domaine des installations électriques pour le bâtiment, et a plus particulièrement pour objet un appareil électrique particulier, notamment un dispositif d'interrupteur électrique étanche.

EP 1 860 748 décrit un interrupteur électrique destiné à répondre à des normes d'étanchéité renforcée, et qui comporte un élément de montage, qui peut être une boîte de montage pour un montage en saillie ou un cadre plat pour un montage encastré. L'appareil présente aussi un couvercle, fait essentiellement de deux pièces, à savoir, d'une part, une plaque en forme de cadre, et, d'autre part, un enjoliveur destiné à venir dans l'ouverture de ladite plaque. La plaque est encliquetée à l'élément de montage, l'enjoliveur étant fixé à la plaque et verrouillant l'encliquetage de la plaque à l'élément de montage dans une configuration comprimant les joints entre la plaque et, d'une part, l'élément de montage, et, d'autre part, l'enjoliveur.

Un des inconvénients de cette solution est toutefois que la fixation du couvercle à l'élément de montage, reposant essentiellement sur l'encliquetage de la plaque sur l'élément de montage, peut ne pas être suffisamment résistante, par exemple si un choc latéral survient sur le couvercle, et surtout si le mur n'est pas complètement plat.

La présente invention a pour but de pallier au moins cet inconvénient et vise notamment à proposer un appareil électrique, du type interrupteur mural, dont la fixation du couvercle est solide, permettant notamment aussi une bonne étanchéité, et un montage ergonomique.

A cet effet, l'invention a pour objet un appareil électrique destiné à être monté en saillie contre ou encastré dans une paroi, comprenant au moins un bloc fonctionnel électrique, du type bloc de commutation, un élément de montage pour le montage à la paroi et la fixation dudit au moins un bloc fonctionnel, tel qu'une boîte pour un montage en saillie ou un support plat pour un montage encastré, et un couvercle, placé sur l'élément de montage,
le couvercle comprenant, d'une part, une plaque présentant au moins une ouverture, et, d'autre part, un enjoliveur, compatible avec le au moins un bloc fonctionnel, placé dans ladite au moins une ouverture, et comprenant une base et une manette,
la base présentant un passage pour des plots que porte la manette et qui sont destinés à agir sur le au moins un bloc fonctionnel, ledit passage étant clos par une membrane élastique portée par ladite base et traversée par lesdits plots.

Cet appareil électrique est caractérisé en ce qu'il présente au moins un moyen de fixation de l'enjoliveur à l'élément de montage, la plaque étant maintenue entre le au moins un enjoliveur et l'élément de montage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

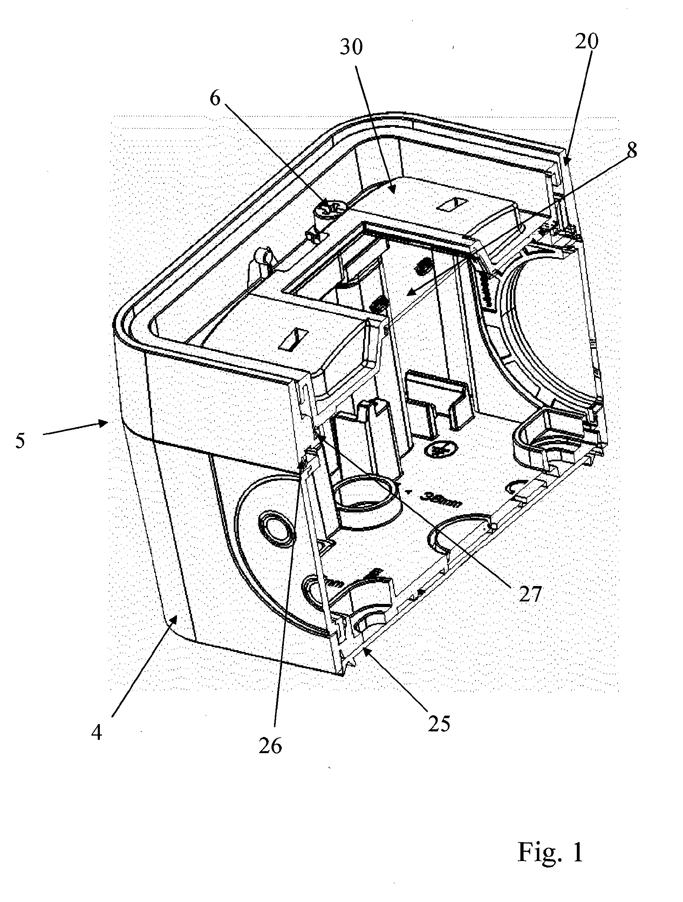

- la figure 1 est une vue en coupe d'un appareil électrique selon l'invention, la manette d'actionnement ayant été ôtée ;

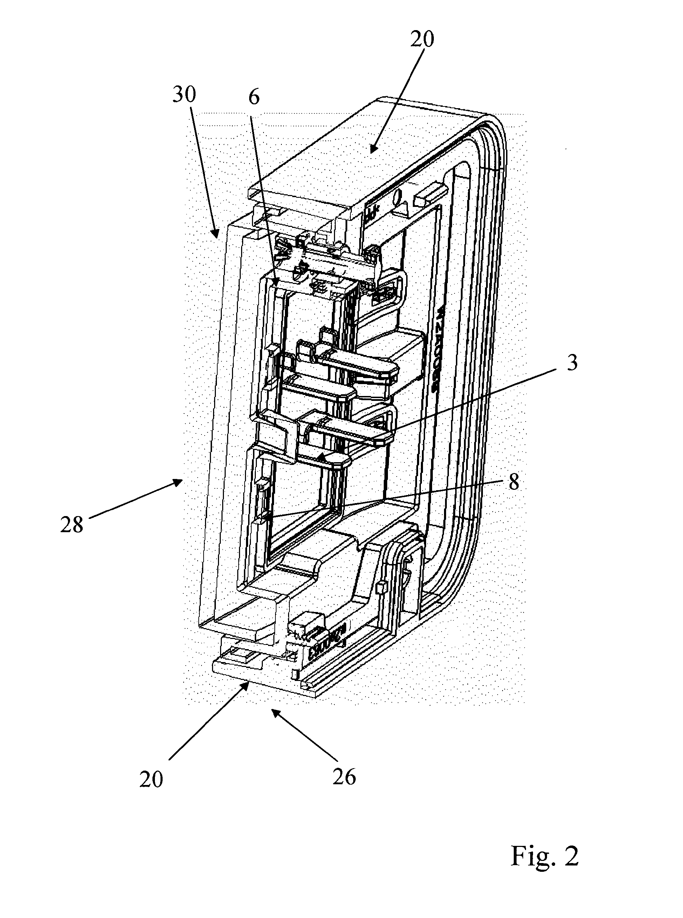

- la figure 2 est une vue partielle en coupe d'un couvercle d'appareil électrique selon l'invention, avec manette et un moyen de fixation ;

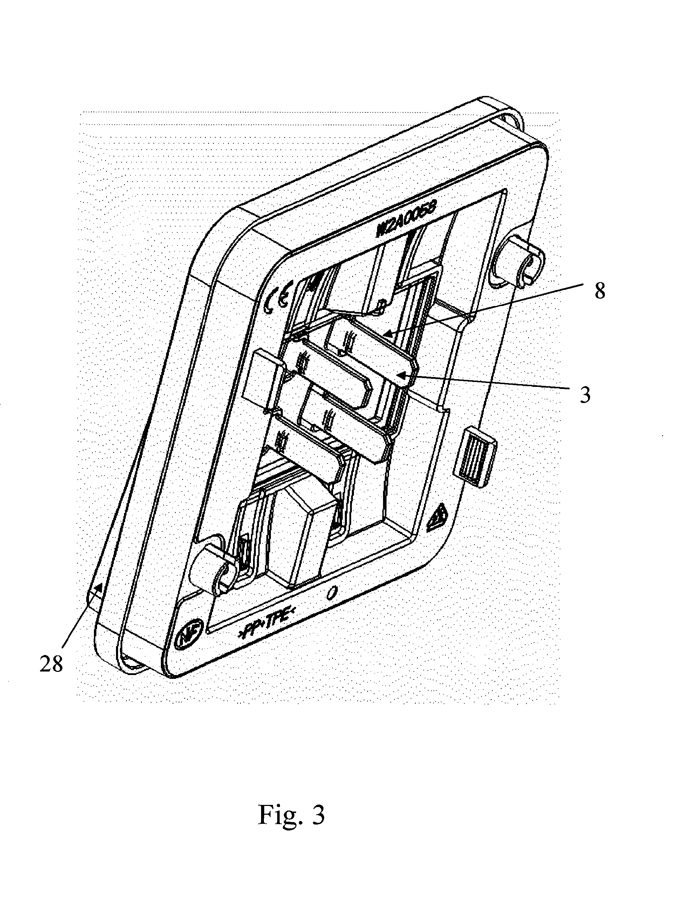

- la figure 3 est une vue arrière d'un enjoliveur d'un appareil selon l'invention, avec une manette ;

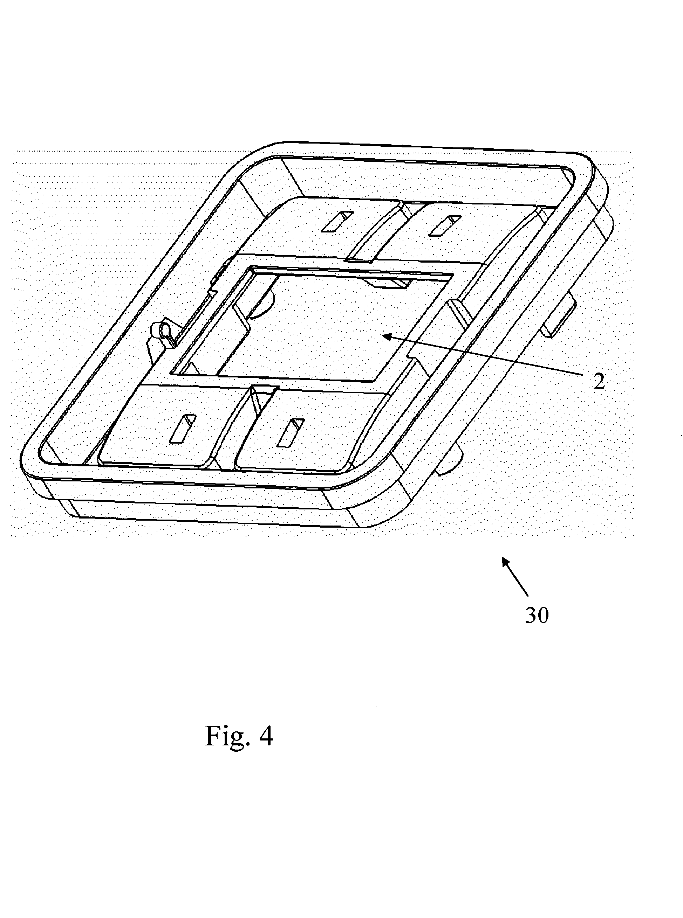

- la figure 4 montre un élément d'enjoliveur, sous la forme d'une base pour manette d'interrupteur ;

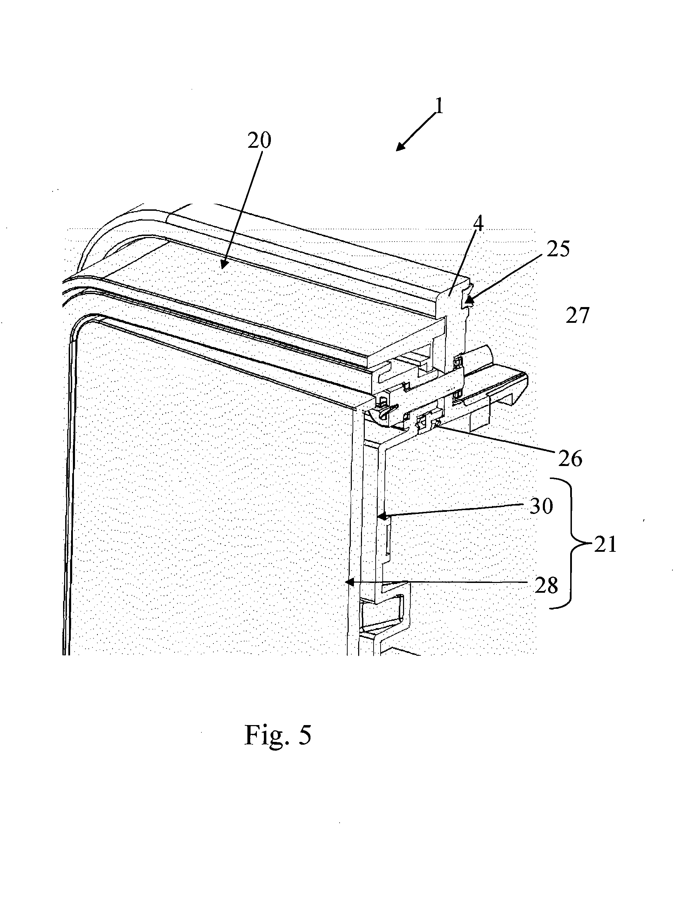

- la figure 5 est une coupe d'un appareil selon l'invention, destiné à être monté encastré, et

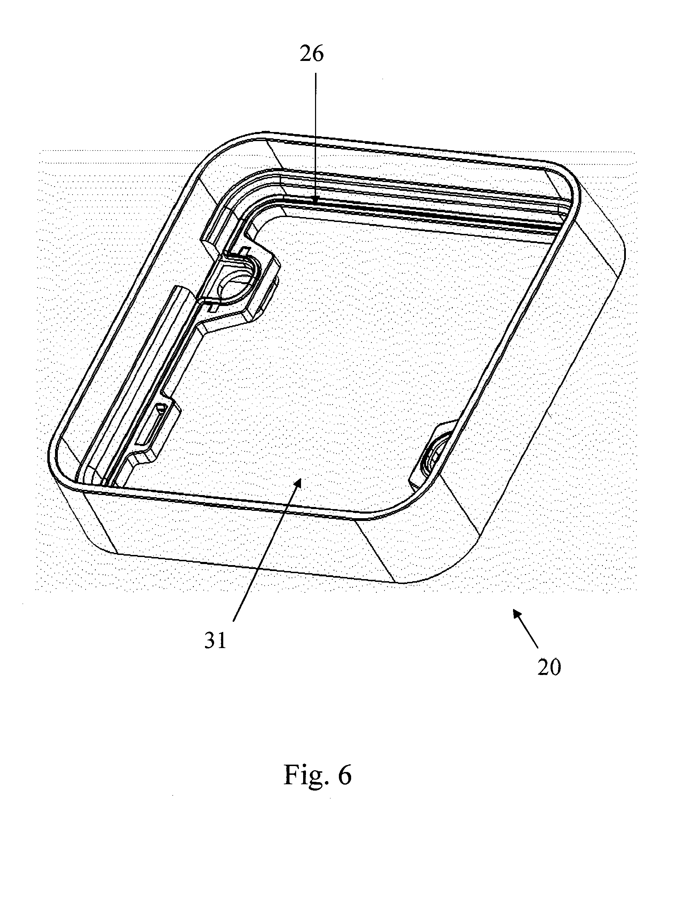

- la figure 6 montre une plaque.

L'invention a donc pour objet un appareil électrique 1 destiné à être monté en saillie contre ou encastré dans une paroi, comprenant au moins un bloc fonctionnel électrique, du type bloc de commutation, un élément de montage 4 pour le montage à la paroi et la fixation dudit au moins un bloc fonctionnel, tel qu'une boîte pour un montage en saillie ou un support plat pour un montage encastré, et un couvercle 5, placé sur l'élément de montage 4,
le couvercle 5 comprenant, d'une part, une plaque 20 présentant au moins une ouverture 31, et, d'autre part, un enjoliveur 21, compatible avec le au moins un bloc fonctionnel, placé dans ladite au moins une ouverture 31, et comprenant une base 30 et une manette 28,
la base 30 présentant un passage 2 pour des plots 3 que porte la manette 28 et qui sont destinés à agir sur le au moins un bloc fonctionnel, ledit passage 2 étant clos par une membrane 8 élastique portée par ladite base 30 et traversée par lesdits plots 3. L'invention est particulièrement avantageuse dans le cas où le bloc fonctionnel est un bloc de commutation, pour interrupteur, mais elle peut aussi s'appliquer à des blocs fonctionnels de transmission, comme pour un socle électrique ou à d'autres types d'appareils électriques comme une radio, un élément de commande domotique, une signalisation lumineuse, etc.

Dans des modes de réalisation particuliers, dans lesquels l'appareil électrique 1 doit répondre à des normes d'étanchéité particulières, ce dernier comprend un joint d'interface 26, entre l'élément de montage 4 et le couvercle 5, au moins un joint interne 27, entre la plaque 20 et le au moins un enjoliveur 21, et notamment aussi un joint arrière 25, au niveau de la face de l'élément de montage destinée à être en contact avec la paroi. Un joint interne 27 est prévu pour chaque enjoliveur 21, le cas échéant. Selon une caractéristique additionnelle possible, permettant notamment de réduire le nombre de pièces, mais contribuant aussi à améliorer l'étanchéité, le joint d'interface 26 et le au moins un joint interne 27 forment une seule pièce, notamment surmoulée sur la plaque 20. L'avantage de recourir à du surmoulage est, le cas échéant, une bien meilleure étanchéité ainsi qu'une simplification de la fabrication. Dans le cas où l'appareil électrique 1 comprend plusieurs enjoliveurs 21, et donc autant de joints internes 27, ils sont donc tous d'une seule pièce avec le joint d'interface 26. Le recours à une seule pièce pour les différents joints présente aussi l'avantage, si elle n'est pas surmoulée mais simplement posée, de simplifier la fabrication.

Selon l'invention, l'appareil électrique 1 présente au moins un moyen de fixation 6 de l'enjoliveur 21 à l'élément de montage 4, la plaque 20 étant maintenue entre le au moins un enjoliveur 21 et l'élément de montage 4. Le au moins un moyen de fixation 6 fixe donc la plaque 20 directement à l'élément de montage 4. Il peut consister essentiellement, par exemple, en une vis, un moyen d'encliquetage, un insert à interposer entre le couvercle et une vis y débouchant, ancrée dans l'élément de montage 4, ou un verrou, sous la forme d'une tige pivotante autour de son axe principal, perpendiculaire au mur de montage, entre une position libre et une position verrouillée. Le moyen de fixation 6 maintient mécaniquement le couvercle 5 à l'élément de montage 4, et est préférentiellement déverrouillable, afin de pouvoir démonter le couvercle 5 et accéder au bloc fonctionnel.

L'appareil électrique 1 est donc formé, dans le cas d'un interrupteur, d'une superposition d'un élément de montage 4, d'une plaque 20, d'une base 30 et d'une manette 28, ces trois derniers formant le couvercle 5. Ces éléments sont successivement en appui l'un contre l'autre, et l'enjoliveur 21, essentiellement formé d'une base 30 et d'une manette 28, est directement fixé à l'élément de montage 4 par au moins un moyen de fixation 6. La plaque 20 est donc prise entre, d'une part, l'élément de montage 4, et, d'autre part, l'enjoliveur 21 qui est ancré audit élément de montage 4 grâce à l'au moins un moyen de fixation 6.

La manette 28 est, quant à elle, fixée directement à la base 30, en tant qu'élément de l'enjoliveur 21. Elle est généralement encliquetée sur la base 30 au niveau des plots de la base 30 servant à son pivotement.

Le fait que la plaque 20 soit prise entre, d'une part, l'élément de montage 4, et, d'autre part, l'enjoliveur 21 fixé à l'élément de montage 4 par au moins un moyen de fixation 6, permet de garantir un bon maintien de tout le couvercle 5 à l'élément de montage 4, mais aussi d'assurer la compression des joints entre la plaque 20, aisément commune à différents appareils d'une même gamme, et, d'une part, l'élément de montage 4, à savoir un joint d'interface 26, ou, d'autre part, l'enjoliveur 21, à savoir au moins un joint interne 27.

La manette 28 présente, au niveau de sa face arrière, des plots 3, sous forme de nervure allongée, qui agissent sur le bloc fonctionnel de commutation de sorte à en faire commuter les contacts. La base 30, sous forme d'une pièce plastique rigide, présente donc un passage 2 de dimensions suffisamment grandes pour que le mouvement des plots 3 ne soit pas gêné par la matière constitutive rigide de la base 30. Les plots 3, lors de l'actionnement de la manette 28, se déplacent donc dans le passage 2 de la base 30, ce dernier formant une découpe prévue dans un capot rigide que forme la base 30.

Le passage 2 est ainsi suffisamment grand pour que les plots 3 ne soient jamais gênés par la matière constitutive rigide de la base 30. Afin d'étanchéifier le passage 2, ce dernier est recouvert d'une membrane 8 élastique. Cette dernière est traversée par les plots 3 au niveau d'orifices suffisamment petits pour ne pas créer d'espace nuisant à l'étanchéité autour du plot 3, et suffisamment élastique pour se déformer en suivant le mouvement desdits plots 3 lors du mouvement de la manette 28. La membrane 8, recouvrant le passage 2 porte donc des orifices au niveau desquels elle est traversée par les plots 3. Compte tenu de l'élasticité de la membrane 8, ces orifices pour plot 3 peuvent aisément suivre le mouvement des plots 3, et la membrane 8 garantit donc l'étanchéité du passage 2, malgré la présence des plots 3 sous forme d'éléments déplaçables.

Selon une caractéristique additionnelle possible, permettant de masquer le au moins un moyen de fixation 6 sous la manette 30, le au moins un moyen de fixation 6 fixe la base 30 à l'élément de montage 4, la plaque 20 étant maintenue entre ladite base 30 et ledit élément de montage 4. Le moyen de fixation 6 peut en effet être une vis, ancrée par son filetage dans l'élément de montage 4 et dont la tête maintient le couvercle 5, et plus précisément la base 30 ou une autre partie de l'enjoliveur 21. La tête de la vis est alors sous la manette 28, et n'est donc plus visible. Le moyen de fixation 6 peut alternativement comprendre un insert, une clé quart de tour, qui alors placé ou placée sous la manette 28. Comme la manette 28 recouvre une grande partie de la base 30, le moyen de fixation 6 est invisible dès lors qu'il se trouve sous ladite manette 28.

Selon une caractéristique additionnelle possible, permettant une installation avec des outils classiques, le au moins un moyen de fixation 6 est actionnable à l'aide d'un outil plat du type tournevis et comprend donc, à cette effet, une rainure adaptée. Le moyen de fixation 6 est préférentiellement actionnable depuis la face avant de l'appareil électrique 1, au niveau du couvercle 5. Il présente donc une rainure ou un jeu de rainure qui permet de créer, à l'aide d'un tournevis ou d'un autre outil plat, le mouvement permettant au moyen de fixation 6 de passer de la position verrouillée, dans laquelle il maintient le couvercle 5 contre l'élément de montage 4, à la position déverrouillée, et inversement.

Selon une caractéristique additionnelle possible, permettant de différencier la fixation du couvercle 5 à l'élément de montage 4 d'autres fixations, par exemple la fixation de l'élément de montage 4 dans un mur, ou encore la fixation du bloc fonctionnel dans l'élément de montage 4, le au moins un moyen de fixation 6 passe d'une position de verrouillage, dans laquelle il fixe le au moins un enjoliveur 21 à l'élément de montage 4, à une position libre, dans laquelle il ne fixe pas le au moins un enjoliveur 21 à l'élément de montage 4, avec une rotation d'une portion de tour, c'est-à-dire une rotation de moins d'un tour. Comme la fixation du couvercle 5, et, plus particulièrement de l'enjoliveur 21, notamment de la base 30, à l'élément de montage 4 dépend directement de la tenue obtenue par le moyen de fixation 6, il est important de différencier cette fixation des autres fixations de l'appareil électrique 1, notamment la fixation mécanique de l'élément de montage 4 au mur, car cette dernière fixation doit être la plus rigide possible. Concernant la fixation du couvercle 5, comme elle pour effet de comprimer des joints d'étanchéité, il pourrait être préjudiciable de la serrer de trop, par exemple en allant jusqu'à écraser complètement les joints et en accélérant ainsi leur vieillissement.

Dans le cas d'un moyen de fixation 6 du type visserie, en particulier dès lors que le moyen de fixation 6 présente des rainures qui en permettent l'actionnement avec un outil plat du type tournevis, une confusion peut donc naître. Le recours à un moyen de fixation 6 passant de sa position verrouillée à sa position libre, et inversement, avec un mouvement de rotation d'une amplitude inférieure à un tour, préférentiellement un quart de tour, permet de faire cette distinction, puisque la fixation de l'élément de montage 4 à la paroi est généralement effectué à l'aide de vis qui créent une tenue mécanique augmentant avec l'amplitude de la rotation.

Le moyen de fixation 6 est donc préférentiellement verrouillé ou déverrouillée en réalisant un mouvement d'un quart de tour. Des principes tels que les verrous à quart de tour ou à demi tour sont donc particulièrement pertinents.

Dans des modes de réalisation particuliers, le mouvement de rotation se fait autour d'un axe perpendiculaire au plan du couvercle 5, ce qui correspond à un mouvement de rotation du même type que celui classiquement utilisé pour la fixation de l'élément de montage 4 au mur.

Dans des modes de réalisation particuliers, le mouvement de rotation se fait autour d'un axe parallèle au plan du couvercle 5, ce qui permet d'éviter toute confusion entre la fixation du couvercle 5 à l'élément de montage 4 de toute autre fixation. Il est en effet important de ne pas confondre la fixation du couvercle 5, qui a un impact sur l'étanchéité et doit donc être traitée de façon particulière, des autres fixations. Cela peut particulièrement correspondre à un insert, qui, afin de verrouiller le moyen de fixation 6, viendrait être glissé entre, d'une part, le couvercle 5, et, plus précisément, l'enjoliveur 21, au niveau d'une surface d'appui, et, d'autre part, la tête d'une vis ancrée dans l'élément de montage 4 et débouchant au-delà de ladite surface d'appui de l'insert dans le couvercle 5.

Selon une caractéristique additionnelle possible, permettant de réduire les coûts tout en conservant un bon maintien du couvercle 5 sur l'élément de montage 4 ainsi qu'une bonne étanchéité, le au moins un enjoliveur 21 est maintenu par deux moyens de fixation 6, disposés à proximité de deux bords opposés dudit au moins un enjoliveur 21 et décalés l'un par rapport à l'autre, l'appareil électrique 1 comprenant, en outre, deux moyens d'accrochage 22 dudit au moins un enjoliveur 21 à la plaque 20, disposés symétriquement aux deux moyens de fixation 6, et consistant essentiellement chacun en une patte munie de crochets, qui s'étend à partir dudit enjoliveur 21, destinée à venir s'accrocher dans un trou prévu dans la plaque 20.

Bien entendu, l'invention n'est pas limitée au mode de réalisation décrit et représenté aux dessins annexés. Des modifications restent possibles, notamment du point de vue de la constitution des divers éléments, par combinaison des caractéristiques décrites ci-dessus, ou par substitution d'équivalents techniques, sans sortir pour autant du domaine de protection de l'invention.

## Revendications

1. Appareil électrique (1) destiné à être monté en saillie contre ou encastré dans une paroi, comprenant au moins un bloc fonctionnel électrique, du type bloc de commutation, un élément de montage (4) pour le montage à la paroi et la fixation dudit au moins un bloc fonctionnel, tel qu'une boîte pour un montage en saillie ou un support plat pour un montage encastré, et un couvercle (5), placé sur l'élément de montage (4),
le couvercle (5) comprenant, d'une part, une plaque (20) présentant au moins une ouverture (31), et, d'autre part, un enjoliveur (21), compatible avec le au moins un bloc fonctionnel, placé dans ladite au moins une ouverture (31), et comprenant une base (30) et une manette (28),
la base (30) présentant un passage (2) pour des plots (3) que porte la manette (28) et qui sont destinés à agir sur le au moins un bloc fonctionnel, ledit passage (2) étant clos par une membrane (8) élastique portée par ladite base (30) et traversée par lesdits plots (3)
appareil électrique (1) **caractérisé en ce qu'**
il présente au moins un moyen de fixation (6) de l'enjoliveur (21) à l'élément de montage (4), la plaque (20) étant maintenue entre le au moins un enjoliveur (21) et l'élément de montage (4).

2. Appareil électrique (1) selon la revendication 1, **caractérisé en ce que** le au moins un moyen de fixation (6) fixe la base (30) à l'élément de montage (4), la plaque (20) étant maintenue entre ladite base (30) et ledit élément de montage (4).

3. Appareil électrique (1) selon l'une quelconque des revendications 1 ou 2, **caractérisé en ce que** le au moins un moyen de fixation (6) est actionnable à l'aide d'un outil plat du type tournevis.

4. Appareil électrique (1) selon l'une quelconque des revendications 1 à 3, **caractérisé en ce que** le au moins un moyen de fixation (6) passe d'une position de verrouillage, dans laquelle il fixe le au moins un enjoliveur (21) à l'élément de montage (4), à une position libre, dans laquelle il ne fixe pas le au moins un enjoliveur (21) à l'élément de montage (4), avec une rotation d'une portion de tour.

5. Appareil électrique (1) selon la revendication 4, **caractérisé en ce que** le mouvement de rotation se fait autour d'un axe perpendiculaire au plan du couvercle (5).

6. Appareil électrique (1) selon la revendication 5, **caractérisé en ce que** le mouvement de rotation se fait autour d'un axe parallèle au plan du couvercle (5).

7. Appareil électrique (1) selon l'une quelconque des revendications 1 à 6, **caractérisé en ce qu'**il comprend un joint d'interface (26), entre l'élément de montage (4) et le couvercle (5), au moins un joint interne (27), entre la plaque (20) et le au moins un enjoliveur (21), et notamment aussi un joint arrière (25), au niveau de la face de l'élément de montage destinée à être en contact avec la paroi.

8. Appareil électrique (1) selon la revendication 7, **caractérisé en ce que** le joint d'interface (26) et le au moins un joint interne (27) forment une seule pièce, notamment surmoulée sur la plaque (20).

9. Appareil électrique (1) selon l'une quelconque des revendications 1 à 8, **caractérisé en ce que** le au moins un enjoliveur (21) est maintenu par deux moyens de fixation (6), disposés à proximité de deux bords opposés dudit au moins un enjoliveur (21) et décalés l'un par rapport à l'autre, l'appareil électrique (1) comprenant, en outre, deux moyens d'accrochage (22) dudit au moins un enjoliveur (21) à la plaque (20), disposés symétriquement aux deux moyens de fixation (6), et consistant essentiellement chacun en une patte munie de crochets, qui s'étend à partir dudit enjoliveur (21), destinée à venir s'accrocher dans un trou prévu dans la plaque (20).

## Patentansprüche

1. Elektrisches Gerät (1), ausgelegt, um vorspringend an oder unter Putz in einer Wand montiert zu werden, umfassend wenigstens einen elektrischen Funktionsblock der Art Umschaltblock, ein Montageelement (4) für die Montage an der Wand und zur Befestigung des wenigstens einen Funktionsblocks, wie etwa ein Gehäuse für eine vorspringende Montage oder ein flacher Träger für eine Unterputzmontage, und einen Deckel (5), der auf dem Montageelement (4) angeordnet ist,
der Deckel (5) umfasst einerseits eine Platte (20), die wenigstens eine Öffnung (31) aufweist und andererseits eine Blende (21), die mit dem wenigstens einen Funktionsblock kompatibel und in die wenigstens eine Öffnung (31) eingesetzt ist und eine Basis (30) und einen Schalthebel (28) umfasst,
die Basis (30) umfasst einen Durchgang (2) für Kontakte (3), welche der Schalthebel (28) trägt und die ausgelegt sind, auf den wenigstens einen Funktionsblock zu wirken, wobei der Durchgang (2) durch eine elastische Membran (8) verschlossen ist, die von der Basis (30) getragen und von den Kontakten (3) durchdrungen ist,
wobei das elektrische Gerät (1) **dadurch gekennzeichnet ist, dass** es wenigstens ein Fixierungsmittel (6) von der Blende (21) zu dem Montageelement (4) umfasst, wobei die Platte (20) zwischen der wenigstens einen Blende (21) und dem Montageelement (4) gehalten ist.

2. Elektrisches Gerät (1) nach Anspruch 1, **dadurch gekennzeichnet, dass** das wenigstens eine Fixierungsmittel (6) die Basis (30) an dem Montageelement (4) befestigt, wobei die Platte (20) zwischen der Basis (30) und dem Montageelement (4) gehalten ist.

3. Elektrisches Gerät (1) nach einem der Ansprüche 1 oder 2, **dadurch gekennzeichnet, dass** das wenigstens eine Fixierungsmittel (6) mittels eines flachen Werkzeugs der Art Schraubendreher betätigbar ist.

4. Elektrisches Gerät (1) nach einem der Ansprüche 1 bis 3, **dadurch gekennzeichnet, dass** das wenigstens eine Fixierungsmittel (6) durch eine Teildrehung von einer Verriegelungsposition, in welcher es die wenigstens eine Blende (21) an dem Montageelement (4) befestigt, in eine freie Position, in der es die wenigstens eine Blende (21) nicht mit dem Montageelement (4) fixiert, übergeht.

5. Elektrisches Gerät (1) nach Anspruch 4, **dadurch gekennzeichnet, dass** die Drehbewegung um eine Achse senkrecht zur Ebene des Deckels (5) durchgeführt wird.

6. Elektrisches Gerät (1) nach Anspruch 5, **dadurch gekennzeichnet, dass** die Drehbewegung um eine Achse parallel zur Ebene des Deckels (5) durchgeführt wird.

7. Elektrisches Gerät (1) nach einem der Ansprüche 1 bis 6, **dadurch gekennzeichnet, dass** es eine Schnittstellendichtung (26) zwischen dem Montageelement (4) und dem Deckel (5), wenigstens eine innere Dichtung (27) zwischen der Platte (20) und der wenigstens einen Blende (21) und insbesondere auch eine hintere Dichtung (25) im Bereich der Seite des Montageelements, die ausgelegt ist, in Kontakt mit der Wand zu stehen, umfasst.

8. Elektrisches Gerät (1) nach Anspruch 7, **dadurch gekennzeichnet, dass** die Schnittstellendichtung (26) und die wenigstens eine innere Dichtung (27) einstückig ausgebildet sind, insbesondere an der Platte (20) angeformt sind.

9. Elektrisches Gerät (1) nach einem der Ansprüche 1 bis 8, **dadurch gekennzeichnet, dass** die wenigstens eine Blende (21) von zwei Fixierungsmitteln (6) gehalten wird, die in der Nähe von zwei gegenüberliegenden Rändern der wenigstens einen Blende (21) angeordnet und gegeneinander versetzt sind, wobei das elektrische Gerät (1) darüber hinaus zwei Ankoppelelemente (22) von der wenigstens einen Blende (21) an die Platte (20) umfasst, die symmetrisch zu den zwei Fixierungsmitteln (6) angeordnet sind und im Wesentlichen jeweils aus einer Kralle mit Haken bestehen, die sich von der Blende (21) erstreckt und die ausgelegt ist, in eine in der Platte (20) vorgesehene Öffnung einzuhaken.

## Claims

1. Electrical appliance (1) intended to be wall-mounted on or flush-mounted in a wall, comprising at least one electrical functional unit, of the switching unit type, a mounting element (4) for mounting to the wall and fixing the said at least one functional unit, such as a box for wall mounting or a flat support for flush mounting, and a cover (5), placed on the mounting element (4),
the cover (5) comprising, on the one hand, a plate (20) having at least one opening (31) and, on the other hand, a trim (21), compatible with the at least one functional unit, placed in the said at least one opening (31) and comprising a base (30) and a handle (28),
the base (30) having a passage (2) for pins (3) that the handle (28) bears and which are intended to act on the at least one functional unit, the said passage (2) being closed by an elastic membrane (8) borne by the said base (30) and through which the said pins (3) pass,
which electrical appliance (1) is **characterized in that** it has at least one fixing means (6) for fixing the trim (21) to the mounting element (4), the plate (20) being held between the at least one trim (21) and the mounting element (4).

2. Electrical appliance (1) according to Claim 1, **characterized in that** the at least one fixing means (6) fixes the base (30) to the mounting element (4), the plate (20) being held between the said base (30) and the said mounting element (4).

3. Electrical appliance (1) according to any one of Claims 1 and 2, **characterized in that** the at least one fixing means (6) can be operated using a flat tool of the screwdriver type.

4. Electrical appliance (1) according to any one of Claims 1 to 3, **characterized in that** the at least one fixing means (6) passes from a locking position in which it fixes the at least one trim (21) to the mounting element (4) to a free position in which it does not fix the at least one trim (21) to the mounting element (4), with a rotation of a portion of a turn.

5. Electrical appliance (1) according to Claim 4, **characterized in that** the rotational movement is about an axis perpendicular to the plane of the cover (5).

6. Electrical appliance (1) according to Claim 5, **characterized in that** the rotational movement is about an axis parallel to the plane of the cover (5).

7. Electrical appliance (1) according to any one of Claims 1 to 6, **characterized in that** it comprises an interface seal (26) between the mounting element (4) and the cover (5), at least one internal seal (27) between the plate (20) and the at least one trim (21), and notably also a rear seal (25) at that face of the mounting element that is intended to be in contact with the wall.

8. Electrical appliance (1) according to Claim 7, **characterized in that** the interface seal (26) and the at least one internal seal (27) form a single piece, notably overmoulded onto the plate (20).

9. Electrical appliance (1) according to any one of Claims 1 to 8, **characterized in that** the at least one trim (21) is held by two fixing means (6) positioned near two opposite edges of the said at least one trim (21) and offset from one another, the electrical appliance (1) further comprising two catching means (22) for catching the said at least one trim (21) on the plate (20), these being arranged symmetrically with respect to the two fixing means (6) and essentially each consisting of a tab provided with hooks, which extends from the said trim (21) and is intended to catch in a hole made in the plate (20).
